# EUROPÄISCHE PATENTANMELDUNG

(11) **EP 2 083 169 A1**
(43) Veröffentlichungstag der Anmeldung: **29.07.2009**
(21) Anmeldenummer: 08001495.4
(22) Anmeldetag: 28.01.2008
(51) Int. Cl.: F03D 1/04, F02C 1/04

(54) **Kraftwerk sowie Verfahren zur Gewinnung von mechanischer oder elektrischer Energie**

(71) Anmelder: Fuchs, Ute, 71332 Waiblingen (DE)
(72) Erfinder: Fuchs, Rainer, 71332 Waiblingen (DE)
(74) Vertreter: Lewandowsky, Klaus

(57) **Zusammenfassung**

Es wird ein Kraftwerk (1,1') zum Erzeugen von mechanischer oder elektrischer Energie vorgestellt mit einem geschlossenen, ein gasförmiges Fluid enthaltendes System (10,110) mit mindestens einem Aufwindrohr (11), das einen von einer Energiequelle gespeisten Heizraum (12) zur Zufuhr von Wärmeenergie aufweist, das an seinem oberen Ende in mindestens ein Abwindrohr (17,117) übergeht, wobei zwischen dem mindestens einen Aufwindrohr (11) und dem mindestens einen Abwindrohr (17,117) mindestens ein Kühlraum (21,121) zum Entzug von Wärmeenergie angeordnet ist, wobei das mindestens eine Aufwindrohr (11) und das mindestens eine Abwindrohr (17,117) an ihren unteren Enden über einen Druckraum (23,123) miteinander verbunden sind, wobei der Druckraum (23,123) mit dem mindestens einen Aufwindrohr (11) über ein eine Turbine (25) aufweisendes Turbinengehäuse (24) verbunden ist, das zwischen dem Druckraum (23,123) und dem Heizraum (12) des mindestens einen Aufwindrohrs (11) angeordnet ist, wobei die Breite (B) bzw. der Durchmesser (D) des Druckraums (23,123) größer ist als die Breite (b) bzw. der Durchmesser (d) des mindestens einen Abwindrohrs (17,117) in seinem Bereich des Eintritts in den Druckraum (23,123). Weiterhin wird ein Verfahren zum Erzeugen von mechanischer oder elektrischer Energie offenbart.

## Beschreibung

Die vorliegende Erfindung betrifft ein Kraftwerk sowie ein Verfahren zum Erzeugen von mechanischer oder elektrischer Energie.

Es ist bereits bekannt, Strom in Windkraftanlagen durch eine aufwärts gerichtete warme Luftströmung (DE 27 07 343 A1, DE 10 2004 002 316 A1) oder durch eine abwärts gerichtete kalte Luftströmung (DE 102 20 055 A1) zu erzeugen. Problematisch hierbei ist aber immer der Wirkungsgrad eines solchen Kraftwerks.

Die Aufgabe, ein umweltfreundliches, für verschiedene Energiequellen geeignetes Kraftwerk mit verbessertem Wirkungsgrad bzw. ein entsprechendes Verfahren zum Erzeugen von mechanischer oder elektrischer Energie bereitzustellen, wird durch ein Kraftwerk mit den Merkmalen des Patentanspruchs 1 bzw. mit einem Verfahren mit den Merkmalen des Patentanspruchs 14 gelöst.

Erfindungsgemäß ist ein Kraftwerk vorgesehen mit einem geschlossenen System mit mindestens einem Aufwindrohr, das einen von der Energiequelle gespeisten Heizraum zur Zufuhr von Wärmeenergie aufweist, das an seinem oberen Ende in mindestens ein Abwindrohr übergeht,
wobei zwischen dem mindestens einen Aufwindrohr und dem mindestens einen Abwindrohr mindestens ein Kühlraum zum Entzug von Wärmeenergie angeordnet ist, wobei das mindestens eine Aufwindrohr und das mindestens eine Abwindrohr an ihren unteren Enden über einen Druckraum miteinander verbunden sind, wobei der Druckraum mit dem mindestens einen Aufwindrohr über ein eine Turbine aufweisendes Turbinengehäuse verbunden ist, das zwischen dem Druckraum und dem Heizraum des mindestens einen Aufwindrohrs angeordnet ist, wobei die Breite bzw. der Durchmesser des Druckraums größer ist als die Breite bzw. der Durchmesser des mindestens einen Abwindrohrs in seinem Bereich des Eintritts in den Druckraum.

Das erfindungsgemäße Verfahren zeichnet sich durch die folgenden Verfahrensschritte aus:
a) ein gasförmiges Fluid wird durch Zufuhr von Wärmeenergie erwärmt und strömt in einem geschlossenen System aufwärts,
b) das gasförmige Fluid wird durch Entzug von Wärmeenergie abgekühlt und strömt im geschlossenen System abwärts,
c) das abgekühlte gasförmige Fluid wird am unteren Ende des geschlossenen Systems unter Druckaufbau gesammelt,
d) das abgekühlte gasförmige Fluid wird unter Erhöhung seiner Strömungsgeschwindigkeit durch ein Turbinengehäuse geleitet, derart, dass eine Turbine angetrieben wird,
wobei die Schritte a) bis d) beliebig oft wiederholt werden.

Das erfindungsgemäße Kraftwerk bzw. das erfindungsgemäße Verfahren beruhen auf dem Grundgedanken, dass das gasförmige Fluid durch Abkühlen an Dichte gewinnt, aufgrund der Gravitation in dem mindestens einen Abwindrohr abwärts strömt und im Druckraum deswegen einen Druck aufbaut, weil der Durchmesser bzw. die Breite des Druckraums größer ist als der Durchmesser bzw. die Breite des einen Abwindrohrs bzw. größer ist als der Durchmesser bzw. die Breite jedes der zwei oder mehreren Abwindrohre. Dabei kann die Querschnittsgeometrie von Druckraum und Abwindrohre(n) beliebig gewählt und kombiniert werden. Wesentlich ist nur, dass die Breite bzw. der Durchmesser des Druckraums über seine gesamte Länge größer ist als die Breite bzw. der Durchmesser jedes in den Druckraum mündenden Abwindrohrs. Die Breite bzw. der Durchmesser des Druckraums kann dabei durchaus über seine Länge variieren, darf aber nicht geringer werden als die Breite bzw. der Durchmesser eines der Abwindrohre. Die Breite bzw. der Durchmesser des Abwindrohrs oder der Abwindrohre wird dabei im Mündungsbereich, d.h. im Bereich des Eintritts in den Druckraum gemessen. Oberhalb des Druckraums können die Querschnittsgeometrie und die Abmessungen des mindestens einen Abwindrohrs selbstverständlich variieren.

Dieser Aufbau des erfindungsgemäßen Kraftwerks bewirkt, dass das gasförmige Fluid infolge des im Druckraum aufgebauten Drucks durch den Turbinenraum gepresst wird, so dass es die dort angeordnete Turbine antreibt. Nach dem Durchströmen des Turbinenraums wird das gasförmige Fluid wieder erwärmt, so dass es an Dichte verliert und im Aufwindrohr aufwärts strömt, bis es den Bereich erreicht, an dem es wieder abgekühlt wird. Der sich damit ergebende Sog beschleunigt den Zustrom von kalter Luft aus dem Druckraum in den Turbinenraum und von dort in den Heizraum. Aus dem Dichteunterschied zwischen dem erwärmten und dem abgekühlten Fluid ergibt sich eine kontinuierliche Strömung des Fluids. Daraus resultiert ein geschlossener Kreislauf, der durch Zufuhr von Wärmeenergie aufrechterhalten wird.

Das erfindungsgemäße Kraftwerk und das erfindungsgemäße Verfahren haben den Vorteil, dass ein größerer Wirkungsgrad erzielt wird als bei bekannten Kraftwerken bzw. Verfahren. Dies hängt damit zusammen, dass sowohl die bei der Erwärmung des Fluids anfallende Abwärme, d.h. die von der jeweiligen Energiequelle stammende Wärmeenergie, die nicht zum Erwärmen des gasförmigen Fluids verwendet wird, als auch die beim Abkühlen des gasförmigen Fluids entzogene Wärmeenergie aufgefangen und genutzt werden kann und somit im Wesentlichen nicht verloren geht Der bessere Wirkungsgrad hat einen weiteren Grund darin, dass es zur Aufrechterhaltung der kontinuierlichen Strömung des gasförmigen Fluids durch Zufuhr von Wärmeenergie lediglich auf den Temperaturunterschied zwischen Aufwindrohr und Abwindrohr, nicht jedoch auf die absolute Temperatur des gasförmigen Fluids ankommt. Dieser Umstand erlaubt es, das erfindungsgemäße Kraftwerk mit vergleichsweise niedrigen Temperaturen des Fluids im Aufwindrohr zu betreiben, bspw. 30°C oder 50°C, mit der Folge, dass die Wärmeabstrahlung durch das Aufwindrohr gering ist. Aus diesem Grund ist der Verlust an Wärmeenergie wesentlich geringer als bei konventionellen Kraftwerken. Darüber hinaus kann die bisher notwendige aufwändige Wärmeisolation entfallen.

Ferner ist das erfindungsgemäße Kraftwerk zum Betrieb mit allen denkbaren Energiequellen geeignet, da die Erzeugung mechanischer oder elektrischer Energie unabhängig von der Natur der Energiequelle erfolgt Es können somit sowohl natürliche bzw. regenerative Energiequellen wie Sonnenenergie, Windenergie, Erdwärme, Biomasse, Bioöl, Biogas, Holz etc. als auch konventionelle Energiequellen wie Erdöl oder Erdgas oder Abwärme eingesetzt werden. Dies ist besonders nützlich, wenn bspw. mit konventionellen Energiequellen Verbrauchsspitzen abgedeckt oder Versorgungslücken, die beim Einsatz natürlicher Energiequellen auftreten können, überbrückt werden müssen.

Vorteilhafte Weiterbildungen ergeben sich aus den Unteransprüchen.

Wenn der Heizraum einen größeren Durchmesser aufweist als das Aufwindrohr, wird das gasförmige Fluid nach dem Durchtritt durch das Turbinengehäuse zusätzlich entspannt, so dass es schneller an Dichte verliert und mit größerer Strömungsgeschwindigkeit im Aufwindrohr aufwärts strömt Damit kann auch das abgekühlte gasförmige Fluid schneller durch das Turbinengehäuse strömen, so dass der Antrieb der Turbine(n) verbessert wird.

Der Heizraum für die Zufuhr von Wärmeenergie und/oder der Kühlraum für den Entzug von Wärmeenergie sind zweckmäßigerweise jeweils mit einem Wärmetauscher ausgestattet, der, bspw. mit einer Wärmepumpe gekoppelt, in konstruktiv einfacher Weise die Zufuhr bzw. den Entzug der Wärmeenergie bewirkt. Die entzogene Wärmeenergie kann in diesem Fall zusätzlich auf einfache Weise weiter genutzt werden, bspw. industriell oder in privaten Haushalten zum Heizen oder zur Warmwasserbereitung. Zu diesem Zweck kann der Kühlraum mit einem Wärmekreislauf, bspw. einem Heizungskreislauf verbunden sein, der ebenfalls mit Wärmetauschern versehen sein kann. Die entzogene Wärmeenergie kann aber auch zum Erwärmen des gasförmigen Fluids nach dem Durchströmen des Turbinengehäuses verwendet werden.

Das Aufwindrohr kann ein Ventil zur Druckregelung aufweisen, um durch Kontrolle des Innendrucks ggf. Gefahrensituationen vorzubeugen.

Der Heizraum des Aufwindrohrs kann zur Zufuhr von Wärmeenergie mit einem Brennraum verbunden sein. Die räumliche Trennung von Brennraum und Heizraum ermöglicht es auf besonders einfache Weise, das erfindungsgemäße Kraftwerk mittels beliebiger, unterschiedlicher Energiequellen zu betreiben. Der Brennraum kann zweckmäßigerweise mit einem Wärmespeicher zur Speicherung der aus der Energiequelle gewonnenen Wärmeenergie gekoppelt sein. Auf diese Weise wird ein Puffer erhalten, mit dem die Wärmeenergie besonders kontinuierlich und gleichmäßig dem Heizraum zugeführt werden kann. Dieser Wärmespeicher kann ggf. direkt, mittels Sonnenenergie betrieben werden, wenn er mit einer Solarzellen aufweisenden Anlage zur Energiegewinnung gekoppelt ist.

Auch die vom Brennraum herrührende Abwärme kann bspw. mittels eines Wärmetauschers ausgeleitet und sinnvoll genutzt werden.

Eine besonders bevorzugte Weiterbildung sieht vor, dass das mindestens eine Abwindrohr des erfindungsgemäßen Kraftwerks ein größeres Volumen aufweist als das mindestens eine Aufwindrohr. Mit anderen Worten: Das einzige Abwindrohr weist ein größeres Volumen auf als das einzige Aufwindrohr oder die addierten Volumina der mehreren Aufwindrohre, oder die addierten Volumina der Abwindrohre sind größer als das Volumen des einzigen Aufwindrohrs oder die addierten Volumina der mehreren Aufwindrohre. Damit wird ein schnellerer und höherer Druckaufbau im Druckraum erreicht, so dass die Turbine(n) besonders wirkungsvoll angetrieben wird/werden.

Eine weitere bevorzugte Weiterbildung besteht darin, dass das Turbinengehäuse eine ringförmige Durchströmöffnung aufweist, in welche die Turbinenschaufeln der Turbine hinein ragen. Durch diese wirksame Verengung des durchströmten Volumens wird das abgekühlte gasförmige Fluid während des Durchströmens des Turbinengehäuses beschleunigt. Auch mit dieser Maßnahme wird der Antrieb der Turbine(n) optimiert. Ferner kann der Abstand zwischen zwei einander gegenüberliegenden Turbinenschaufeln, und damit auch der Durchmesser der ringförmigen Durchströmöffnung, besonders groß gewählt werden, so dass die Anordnung einer größeren Anzahl von Turbinenschaufeln möglich ist, und diese darüber hinaus auch noch einen größeren Hebelarm aufweisen. Dadurch wird nicht nur der Wirkungsgrad weiter erhöht, sondern selbst bei besonders geringen Strömungsgeschwindigkeiten des Fluids und niedriger Drehzahl der Turbine(n) kann diese wirkungsvoll angetrieben werden.

Zur Erzeugung von elektrischer Energie kann die Turbine in an sich bekannter Weise mit einem Generator verbunden sein.

Ausführungsbeispiele der vorliegenden Erfindung werden im Folgenden anhand der beigefügten Zeichnungen näher beschrieben. Es zeigen in schematischer, nicht maßstabsgetreuer Darstellung:
- Figur 1: ein erstes Ausführungsbeispiel eines erfindungsgemäßen Kraftwerks in einer Gesamtdarstellung;
- Figur 2: eine vergrößerte Teildarstellung des Turbinengehäuses mit angrenzendem Druckraum und Heizraum gemäß Figur 1;
- Figur 3: ein Ausführungsbeispiel einer Turbine für ein erfindungsgemäßes Kraftwerk mit ihren im Bereich der ringförmigen Durchströmöffnung angeordneten Turbinenschaufeln;
- Figur 4: ein Ausführungsbeispiel für die Anordnung und Anströmung der Turbinenschaufeln einer Turbine für ein erfindungsgemäßes Kraftwerk;
- Figur 5: ein weiteres Ausführungsbeispiel eines erfindungsgemäßen Kraftwerks in einer vereinfachten Darstellung;
- Figuren 6a bis 6d: Teitdarstellungen des Druckraums mit einem darin mündenden Abwindrohr in verschiedenen Querschnittsgeometrien.

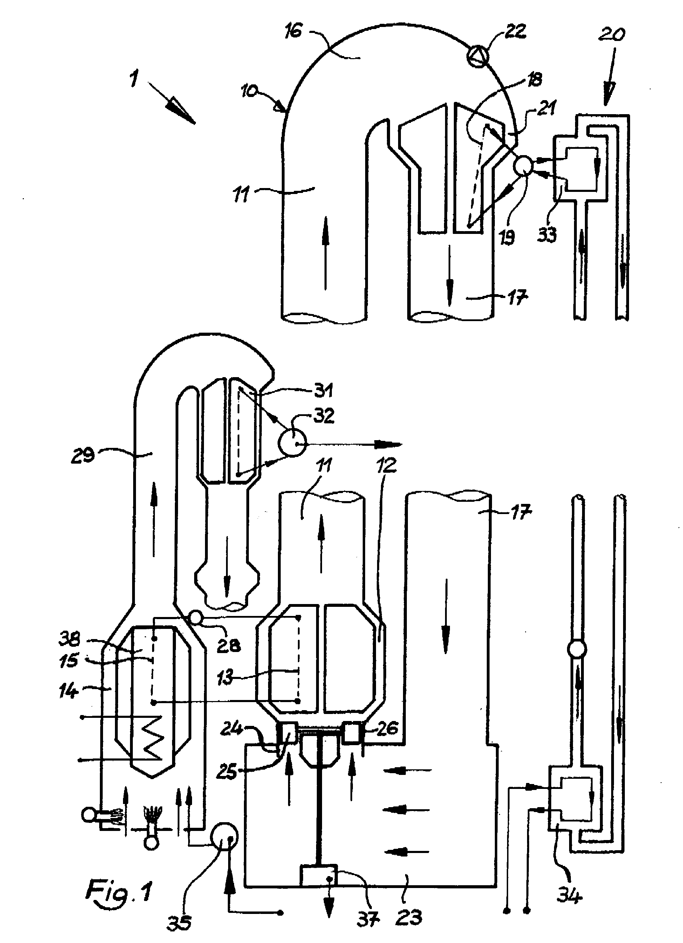

Figur 1 zeigt ein Ausführungsbeispiel eines erfindungsgemäßen Kraftwerks 1. Das Kraftwerk 1 weist ein geschlossenes System 10 auf, das von einem gasförmigen Fluid, im Ausführungsbeispiel von Luft, kontinuierlich durchströmt wird. Das geschlossene System 10 besteht im Wesentlichen aus einem Aufwindrohr 11, einem Abwindrohr 17, einer das Aufwindrohr 11 und das Abwindrohr 17 an ihren oberen Enden verbindenden Rohrbrücke 16 und einem Druckraum 23, der das Aufwindrohr 11 und das Abwindrohr 17 an ihren unteren Enden miteinander verbindet. Das Aufwindrohr 11 weist einen Heizraum 12 auf, in dem im Ausführungsbeispiel ein Wärmetauscher 13 angeordnet ist. Diesem Heizraum 12 kann über den Wärmetauscher 13 Wärmeenergie zugeführt werden, wie dies weiter unten beschrieben wird. Das obere Ende des Aufwindrohrs 11 führt über eine im Ausführungsbeispiel etwa halbkreisförmige Rohrbrücke 16 und mündet in das Abwindrohr 17. Im Bereich der Rohrbrücke 16 ist ein Ventil 22 zur Regelung des Drucks im geschlossenen System 10 vorgesehen. Zwischen dem Aufwindrohr 11 und dem Abwindrohr 17, im Ausführungsbeispiel am, dem Abwindrohr 17 benachbarten, Ende der Rohrbrücke 16, ist ein Kühlraum 21 angeordnet, der im Ausführungsbeispiel ebenfalls mit einem Wärmetauscher 18 versehen ist Der Wärmetauscher 18 seinerseits ist im Ausführungsbeispiel über eine Wärmepumpe 19 mit einem Wärmekreislauf 20 verbunden. Das Abwindrohr 17 mündet in einen Druckraum 23, der das untere Ende des Abwindrohrs 17 mit dem unteren Ende des Aufwindrohrs 11 verbindet.

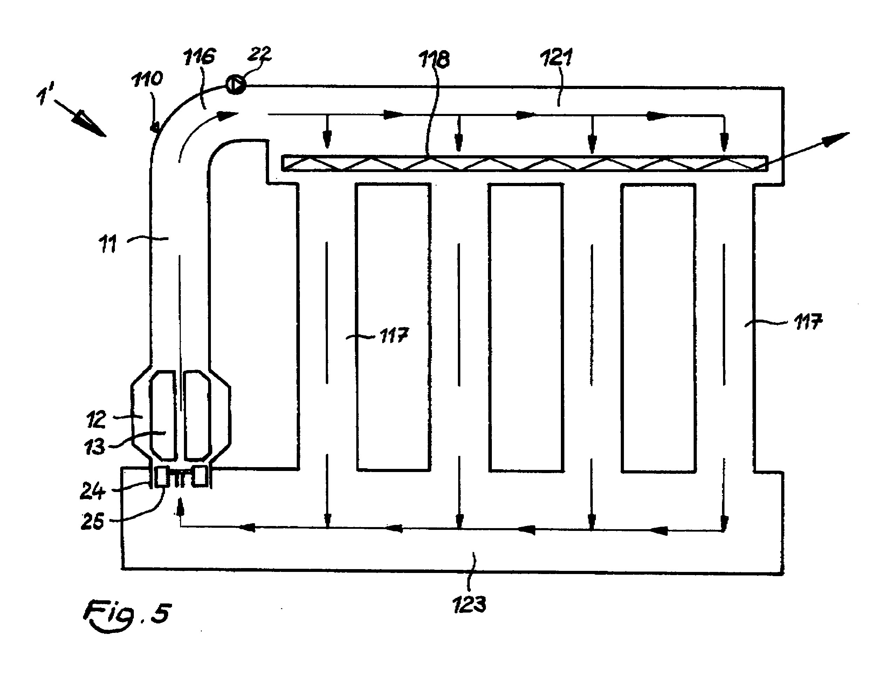

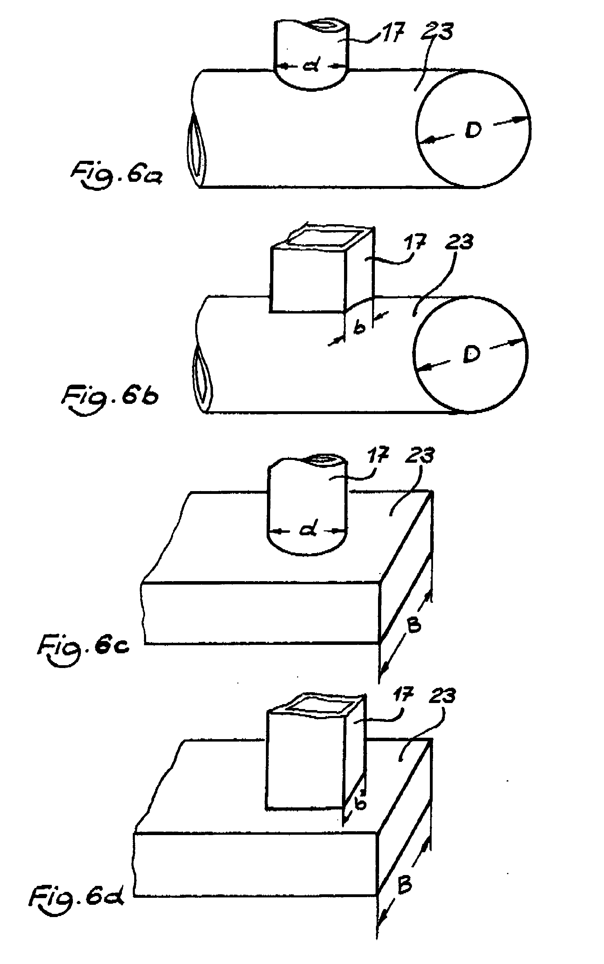

Wie insbesondere aus den Figuren 6a bis 6d ersichtlich ist, ist die Breite (B) bzw. der Durchmesser (D) des Druckraums 23 größer als der Durchmesser (d) bzw. die Breite (b) des in den Druckraum 23 mündenden Abwindrohrs 17. Die Breite (b) bzw. der Durchmesser (d) wird im Mündungsbereich des Abwindrohrs 17 gemessen. Die Abmessungen und die Querschnittsgeometrien des Abwindrohrs 17 können oberhalb des Druckraums 23 variieren (nicht dargerstellt). Auch die Breite (B) bzw. der Durchmesser (D) des Druckraums 23 kann über die Länge des Druckraums 23 variieren, darf aber nicht geringer werden als die Breite (b) bzw. der Durchmesser (d) des Abwindrohrs 17. Dies gilt auch, wenn mehrere Abwindrohre vorgesehen sind (vgl. Figur 5), das heißt, die Breite (B) bzw. der Durchmesser (D) des Druckraums muss immer größer sein als Breite (b) bzw. der Durchmesser (d) jedes Abwindrohrs.

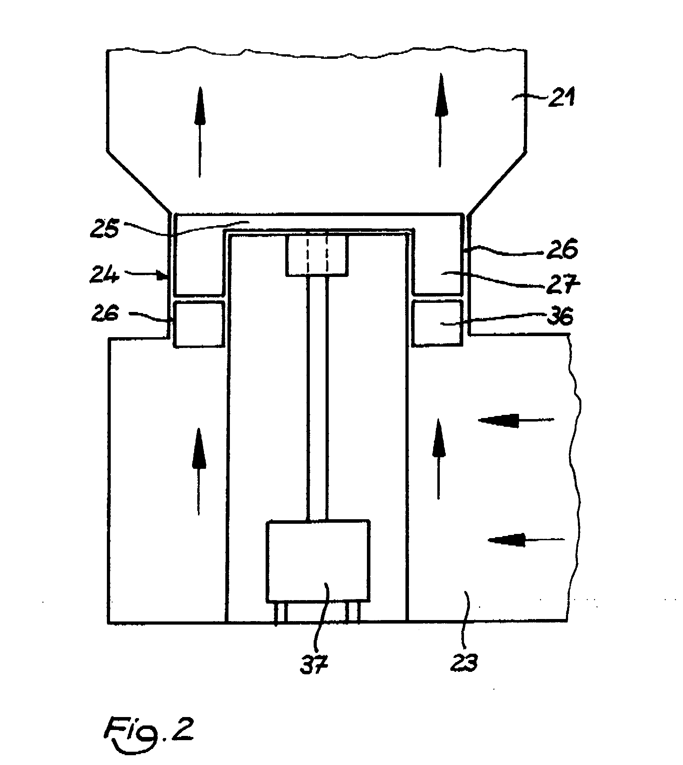

Zwischen dem Druckraum 23 und dem unteren Ende des Aufwindrohrs 11 ist ein Turbinengehäuse 24 mit einer Turbine 25 angeordnet Wie auch aus Figur 2 ersichtlich ist, ist das Turbinengehäuse 24 mit einer ringförmigen Durchströmöffnung 26 für das gasförmige Fluid versehen. In die Durchströmöffnung 26 ragen die Turbinenschaufeln 27 der Turbine 25 hinein. Leitbleche 36 dienen in an sich bekannter Weise zur Regelung der Strömungsgeschwindigkeit des gasförmigen Fluids. Die Turbine 25 ist im Ausführungsbeispiel mit einem Generator 37 zur Stromerzeugung verbunden.

Der Heizraum 12 des Aufwindrohrs 11 dient dazu, dem gasförmigen Fluid nach dem Durchströmen des Turbinengehäuses 24 Wärmeenergie zuzuführen. Hierfür ist der Heizraum 12 im Ausführungsbeispiel mit einem Wärmetauscher 13 versehen. Der Wärmetauscher 13 ist im Ausführungsbeispiel mit einem Wärmetauscher 15 gekoppelt, bspw. über eine Wärmepumpe 28. Der Wärmetauscher 15 wiederum ist in einem Brennraum 14 angeordnet, der mittels einer beliebigen Energiequelle mit Wärmeenergie gespeist wird. Die nicht vom Wärmetauscher 15 aufgenommene Wärmeenergie wird in einem Abwärmerohr 29 mittels eines weiteren Wärmetauschers 31 und einer Wärmepumpe 32 als Abwärme aufgefangen und genutzt, bspw. industriell oder in Haushalten zur Heißwasserbereitung oder zum Betrieb einer Heizung. Eventuell verbleibende Abgase werden in an sich bekannter Weise gefiltert und ins Freie geleitet Der Brennraum 14 kann mit einem Wärmespeicher 38 gekoppelt sein, in dem die aus der Energiequelle erhaltene Wärmeenergie zwischengespeichert und besonders gleichmäßig über die Wärmetauscher 15, 13 in den Heizraum 12 geleitet wird.

Der im Kühlraum 21 angeordnete Wärmetauscher 18 ist im Ausführungsbeispiel über eine Wärmepumpe 19 mit einem Wärmekreislauf 20 verbunden. Die Verbindung wird im Ausführungsbeispiel über einen weiteren Wärmetauscher 33 hergestellt. Im Wärmekreislauf 20 läuft ein Fluid, bspw. ein Gas oder eine Flüssigkeit, um. Dem Wärmekreislauf 20 kann wiederum Wärmeenergie über einen zweiten Wärmetauscher 34 entzogen werden. Die auf diese Weise aufgefangene Wärmeenergie kann bspw, in an sich bekannter Weise industriell oder in Haushalten zur Heißwasserbereitung oder Heizung verwendet werden, sie kann aber auch als Prozesswärme bspw. über eine Wärmepumpe 35 in den Brennraum 14 bzw. den Wärmespeicher 38 zurückgeführt werden.

Das erfindungsgemäße Verfahren hat im Ausführungsbeispiel den folgenden Ablauf. Im Brennraum 14 wird aus einer beliebigen Energiequelle Wärmeenergie erzeugt, die mittels der Wärmetauscher 15, 13 auf den Heizraum 12 des Aufwindrohrs 11 des geschlossenen Systems 10 übertragen wird. Das geschlossene System 10 enthält im Ausführungsbeispiel Luft als gasförmiges Fluid. Die Luft wird im Heizraum 12 erwärmt (bspw. auf 30°C oder 50°C), steigt im Aufwindrohr 11 aufwärts und strömt durch die Rohrbrücke 16 in den Kühlraum 21. Dort wird die warme Luft mittels des Wärmetauschers 18 abgekühlt. Dabei kommt es nicht darauf an, nach dem Abkühlen eine bestimmte absolute Temperatur zu erreichen. Wichtig ist der Temperaturunterschied zur erwärmten, im Aufwindrohr 11 aufsteigenden Luft Dieser Temperaturunterschied kann bspw. 30 bis 40°C betragen. Die vom Wärmetauscher 18 der Luft entzogene Wärmeenergie wird über die Wärmepumpe 19 dem gesonderten Wärmekreislauf 20 zugeführt und auf beliebige Weise genutzt insbesondere kann die Wärmeenergie über den Wärmetauscher 34 und die Wärmepumpe 35 in den Brennraum 14 bzw.in den Wärmetauscher 38 zurückgeführt werden.

Die im Kühlraum 21 abgekühlte Luft weist eine größere Dichte auf als die erwärmte, im Aufwindrohr 11 aufsteigende Luft. Die abgekühlte Luft strömt daher im Abwindrohr 17 infolge der Schwerkraft abwärts und sammelt sich im Druckraum 23. Da der Durchmesser (D) bzw. die Breite (B) des Druckraums 23 größer ist als der Durchmesser (d) bzw. die Breite (b) des Abwindrohrs 17 im Bereich seines Eintritts in den Druckraum 23, wird ein Druck aufgebaut, der die abgekühlte Luft in Richtung des Turbinengehäuses 24 drückt.

Am Turbinengehäuse 24 wirken nun zwei Mechanismen zusammen. Das Turbinengehäuse 24 mündet in den Heizraum 12, in dem die abgekühlte Luft wieder erwärmt wird und im Aufwindrohr 11 aufwärts strömt. Dadurch entsteht ein Sog, der die abgekühlte Luft im Druckraum 23 in Richtung des Turbinengehäuses zieht. Dieser Mechanismus addiert sich zum oben beschriebenen Mechanismus, bei dem der im Druckraum 23 aufgebaute Druck die abgekühlte Luft in Richtung des Turbinengehäuses 24 drückt. Die abgekühlte Luft strömt durch die im Ausführungsbeispiel ringförmige Durchströmöffnung 26 des Turbinengehäuses 24. Aufgrund des geringeren Volumens der Durchströmöffnung 26 gegenüber dem Druckraum 23 einerseits und des Heizraums 12 andererseits ergibt sich nach den Strömungsgesetzen eine beschleunigte Strömung der abgekühlten Luft durch die Durchströmöffnung 26 hindurch. Dieser Effekt wird noch dadurch verstärkt, dass die abgekühlte Luft im Heizraum 12, der ein größeres Volumen aufweist als die Durchströmöffnung 26, entspannt wird. Diese Entspannung kann noch verstärkt werden, wenn wie im Ausführungsbeispiel der Heizraum 12 einen größeren Durchmesser aufweist als das Aufwindrohr 11. Die Strömungsgeschwindigkeit der Luft kann auch mittels der Wärmepumpe 28, d.h. durch die Regelung der in den Heizraum 12 zugeführten Wärmeenergie, und/oder mittels der Wärmepumpe 19, d.h. durch die Regelung der aus dem Kühlraum 21 entnommenen Wärmeenergie, geregelt werden.

Diese Mechanismen haben zur Folge, dass die abgekühlte Luft auch bei geringer Strömungsgeschwindigkeit im Aufwindrohr 11, in der Rohrbrücke 16, im Abwindrohr 17 sowie im Druckraum 23 die im Turbinengehäuse 24 angeordnete Turbine 25 wirkungsvoll antreibt, so dass bspw. über den Generator 37 Strom erzeugt wird. Es resultiert also ein geschlossener Kreislauf aus zirkulierender warmer und kalter Luft, der durch die Zufuhr von Wärmeenergie aus dem Brennraum 14 bzw. dem Wärmespeicher 38 in den Heizraum 12 aufrechterhalten wird.

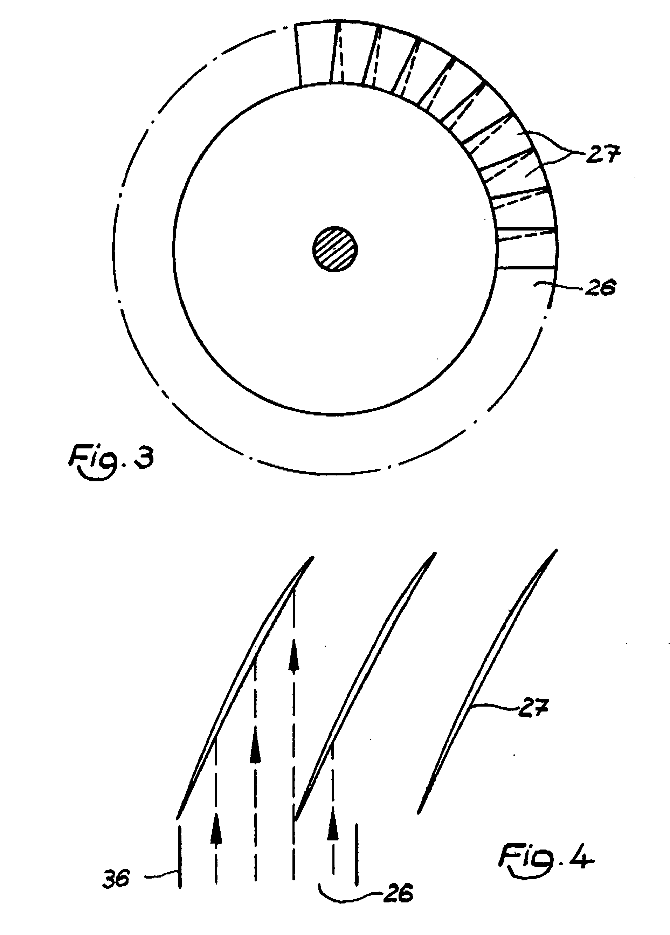

Aus den Figuren 3 und 4 geht hervor, dass aufgrund eines an das erfindungsgemäße Kraftwerk 1 angepassten Aufbaus der Turbine 25 der Wirkungsgrad des Kraftwerks 1 noch verbessert werden kann. Insbesondere aus Figur 3 ist ersichtlich, dass der Durchmesser der Turbine 24 besonders groß gewählt werden kann, so dass der Abstand zweier gegenüberliegender Turbinenschaufeln 27 größer ist als bei üblichen Turbinen. Damit wird die Hebelwirkung der Turbinenschaufeln 27 vergrößert, und es kann auch eine größere Anzahl von Turbinenschaufeln 27 untergebracht werden. Zusätzlich kann der Anstellwinkel der Turbinenschaufeln 27, wie in Figur 4 beispielhaft dargestellt, in Bezug auf die Strömungsrichtung der abgekühlten Luft in der Durchströmöffnung 26 optimiert werden. Aufgrund dieser konstruktiven Maßnahmen kann die abgekühlte Luft die Turbine 25 beim Durchströmen des Turbinengehäuses 24 noch wirkungsvoller antreiben. Der Rotor der Turbine 25 kann bspw. magnetisch gelagert sein, um einen besonders reibungsarmen Betrieb der Turbine 25 zu erzielen.

Figur 5 zeigt schematisch ein weiteres Ausführungsbeispiel eines geschlossenen Systems 110 eines erfindungsgemäßen Kraftwerks 1'. Gleiche Bestandteile sind mit den gleichen Bezugszeichen versehen. Das geschlossene System 110 weist im Ausführungsbeispiel vier Abwindrohre 117 auf, die über einen gemeinsamen Kühlraum 121 mit einem gemeinsamen Wärmetauscher 118 mit der Rohrbrücke 116 verbunden sind. Damit ist das Volumen der Abwindrohre 117 größer als das Volumen des einzigen Aufwindrohrs 11, so dass die oben beschriebenen Vorgänge mit noch höherem Wirkungsgrad ablaufen. Es versteht sich von selbst, dass statt mehrerer Abwindrohre 117 auch ein einziges Abwindrohr mit einem größeren Volumen als das Aufwindrohr 11 vorgesehen sein kann (nicht dargestellt). Außerdem kann jedes Abwindrohr 117 einen separaten Kühlraum mit einem eigenen Wärmetauscher aufweisen (nicht dargestellt). Wesentlich ist, dass die Breite (B) bzw. der Durchmesser (D) des Druckraums 123 größer ist als die Breite (b) bzw. der Durchmesser (d) jedes einzelnen Abwindrohrs 117 im Bereich ihres Eintritts in den Druckraum 123.

Ebenso können auch mehrere Aufwindrohre mit separaten Heizräumen oder einem gemeinsamen Heizraum vorgesehen sein. Wesentlich ist, dass das Gesamtvolumen des Abwindrohrs bzw. der Abwindrohre gleich groß oder größer ist als das Gesamtvolumen der Aufwindrohre (nicht dargestellt).

## Patentansprüche

1. Kraftwerk (1, 1') zum Erzeugen von mechanischer oder elektrischer Energie, mit einem geschlossenen, ein gasförmiges Fluid enthaltendes System (10, 110) mit mindestens einem Aufwindrohr (11), das einen von einer Energiequelle gespeisten Heizraum (12) zur Zufuhr von Wärmeenergie aufweist, das an seinem oberen Ende in mindestens ein Abwindrohr (17, 117) übergeht, wobei zwischen dem mindestens einen Aufwindrohr (11) und dem mindestens einen Abwindrohr (17, 117) mindestens ein Kühlraum (21, 121) zum Entzug von Wärmeenergie angeordnet ist, wobei das mindestens eine Aufwindrohr (11) und das mindestens eine Abwindrohr (17, 117) an ihren unteren Enden über einen Druckraum (23, 123) miteinander verbunden sind, wobei der Druckraum (23, 123) mit dem mindestens einen Aufwindrohr (11) über ein eine Turbine (25) aufweisendes Turbinengehäuse (24) verbunden ist, das zwischen dem Druckraum (23, 123) und dem Heizraum (12) des mindestens einen Aufwindrohrs (11) angeordnet ist, wobei die Breite (B) bzw. der Durchmesser (D) des Druckraums (23, 123) größer ist als die Breite (b) bzw. der Durchmesser (d) des mindestens einen Abwindrohrs (17, 117) in seinem Bereich des Eintritts in den Druckraum (23, 123).

2. Kraftwerk nach Anspruch 1, **dadurch gekennzeichnet, dass** der Heizraum (12) einen größeren Durchmesser aufweist als das Aufwindrohr (11).

3. Kraftwerk nach Anspruch 1 oder 2, **dadurch gekennzeichnet, dass** der Heizraum (12) und/oder der Kühlraum (21) mit einem Wärmetauscher (13; 18) versehen ist

4. Kraftwerk nach einem der vorhergehenden Ansprüche, **dadurch gekennzeichnet, dass** das Aufwindrohr (11) ein Ventil (22) zur Druckregelung aufweist.

5. Kraftwerk nach einem der vorhergehenden Ansprüche, **dadurch gekennzeichnet, dass** der Heizraum (12) des Aufwindrohrs (11) zur Zufuhr von Wärmeenergie mit einem von einer konventionellen oder regenerativen oder natürlichen Energiequelle gespeisten Brennraum (14) verbunden ist

6. Kraftwerk nach Anspruch 5, **dadurch gekennzeichnet, dass** der Brennraum (14) mit einem Wärmespeicher (38) zur Speicherung der erhaltenen Wärmeenergie gekoppelt ist.

7. Kraftwerk nach Anspruch 6, **dadurch gekennzeichnet, dass** der Wärmespeicher (38) mit einer Solarzellen aufweisenden Anlage zur Energiegewinnung gekoppelt ist

8. Kraftwerk nach einem der Ansprüche 5 bis 7, **dadurch gekennzeichnet, dass** ein weiterer Wärmetauscher (31) zur Nutzung der Abwärme des Brennraums (14) vorgesehen ist.

9. Kraftwerk nach einem der vorhergehenden Ansprüche, **dadurch gekennzeichnet, dass** das mindestens eine Abwindrohr (17, 117) ein größeres Volumen aufweist als das mindestens eine Aufwindrohr (11).

10. Kraftwerk nach einem der vorhergehenden Ansprüche, **dadurch gekennzeichnet, dass** der Kühlraum (21, 121) zur Nutzung der entzogenen Wärmeenergie mit einem Wärmekreislauf (20) verbunden ist.

11. Kraftwerk nach Anspruch 10, **dadurch gekennzeichnet, dass** der Wärmekreislauf (20) Wärmetauscher (33, 34) aufweist.

12. Kraftwerk nach einem der vorhergehenden Ansprüche, **dadurch gekennzeichnet, dass** das Turbinengehäuse (24) eine ringförmige Durchströmöffnung (26) aufweist, in welche die Turbinenschaufeln (27) der Turbine (25) hinein ragen.

13. Kraftwerk nach einem der vorhergehenden Ansprüche, **dadurch gekennzeichnet, dass** die Turbine (25) mit einem Generator (37) verbunden ist.

14. Verfahren zum Erzeugen von mechanischer oder elektrischer Energie, mit folgenden Schritten:
a) ein gasförmiges Fluid wird durch Zufuhr von Wärmeenergie erwärmt und strömt in einem geschlossenen System (10, 110) aufwärts,
b) das gasförmige Fluid wird durch Entzug von Wärmeenergie abgekühlt und strömt im geschlossenen System (10, 110) abwärts.
c) das abgekühlte gasförmige Fluid wird am unteren Ende des geschlossenen Systems (10, 110) unter Druckaufbau gesammelt,
d) das abgekühlte gasförmige Fluid wird unter Erhöhung seiner Strömungsgeschwindigkeit durch ein Turbinengehäuse (24) geleitet, derart, dass eine Turbine (25) angetrieben wird,
wobei die Schritte a) bis d) beliebig oft wiederholt werden.

15. Verfahren nach Anspruch 14, **dadurch gekennzeichnet, dass** das gasförmige Fluid nach Schritt d) und vor oder während Schritt a) entspannt wird.

16. Verfahren nach Anspruch 14 oder 15, **dadurch gekennzeichnet, dass** der Druck im geschlossenen System (10) im Bereich des aufwärts strömenden gasförmigen Fluids geregelt wird.

17. Verfahren nach einem der Ansprüche 14 bis 16, **dadurch gekennzeichnet, dass** zum Erwärmen des gasförmigen Fluids eine konventionelle oder regenerative oder natürliche Energiequelle verwendet wird.

18. Verfahren nach einem der Ansprüche 14 bis 17, **dadurch gekennzeichnet, dass** die anfallende Abwärme und/oder die entzogene Wärmeenergie aufgefangen und genutzt wird bzw. werden.
